# EUROPEAN PATENT APPLICATION

(11) **EP 2 210 490 A2**
(43) Date of publication of application: **28.07.2010**
(21) Application number: 10151916.3
(22) Date of filing: 12.02.2005
(51) Int. Cl.: A01N 25/10, A01N 25/24, A01N 25/26, A01N 37/50, A01N 35/04, A01N 37/52, A01N 43/653, A01C 1/06, A01N 25/00

(54) **Formulation for seed treatment**

(30) Priority: 16.02.2004 EP 04003391
(62) Divisional of application: 05707358.7
(71) Applicant: BASF SE, 67056 Ludwigshafen (DE)
(72) Inventor: Schneider, Karl-Heinrich, 67271 Kleinkarlbach (DE); Taranta, Claude, 76297 Stutensee (DE); Mayer, Winfried, 55270 Bubenheim (DE); Voeste, Dirk, 67117 Limburgerhof (DE); Haden, Egon, 67061 Ludwigshafen (DE); Stammler, Gerd, 69221 Dossenheim (DE); Kojima, Kenichi, Aichi-prefecture (JP); Motoyoshi, Masatoshi, Aichi-prefecture (JP); Takayanagi, Norikazu, Toyohashi-shi, Aichi-prefecture (JP); Yamada, Osamu, Aichi-prefecture (JP)

(57) **Abstract**

A seed treatment formulation comprising
(a) at least one pesticidal agent; and
(b) a carboxyl group containing polymer or copolymer selected from the group consisting of styrene butadiene rubber latex polymers with a glass transition temerature of -40°C to 5°C, specific acrylate copolymers and specific ethylene vinyl acetate copolymers;
seeds containing it, a method for treatment of seeds prior sowing, a method for combating undesired vegetation and/or insects and/orfungi.

## Description

The present invention comprises a seed treatment formulation comprising
(a) at least one pesticidal agent; and
(b) a carboxyl group containing polymer or copolymer selected from the group consisting of styrene butadiene rubber latex polymers with a glass transition temerature of -40°C to 5°C, acrylate copolymers and ethylene vinyl acetate copolymers,
   wherein
   (i) the acrylate copolymers consist of
      (a') acrylic acid, methacrylic acid or itaconic acid or a combination of at least two monomers selected from the group consisting of acrylic acid, methacrylic acid or itaconic acid; and
      (b') monomers selected from the group consisting of alkyl (meth)acrylates such as methyl (meth)acrylate, ethyl (meth)acrylate, n-propyl (meth)acrylate, n-butyl meth)acrylate, t-butyl (meth)acrylate, lauryl (meth)acrylate, cyclohexyl (meth)acrylate 2-ethylhexyl (meth)acrylate, stearyl (meth)acrylate, dodecyl(meth)acrylate and (meth)acrylamides such as dimethyl(moth)acrylamide, diethyl(meth)acrylamide, isopropyl(meth)acrylamide,(meth)acryloyl morpholine, dimethylaminomethyl(meth)acrylamide, dimethylaminoethyl(meth)acrylamide, dimethylaminopropyl(meth)acrylamide, diethylaminomethyl(meth)acrylamide, diethylaminoethyl(meth)acrylamide, diethylaminopropyl(meth)acrylamide; and
      (c') monomers selected from the group consisting of 2-hydroxyethyl acrylate, 2-hydroxypropyl acrylate, 2-hydroxyethyl methacrylate, 2-hydroxypropyl methacrylate, glycidyl (meth)acrylate; and
      (d') monomers selected from the group consisting of styrene and styrene derivatives such as styrene, α-methyl styrene, o-methyl styrene, m-methyl styrene p-methyl styrene, p-t-butyl styrene, p-chloromethyl styrene, p-styrenesulfonic acid and its sodium or potassium salt, o-methoxystyrene, m-methoxystyrene, p-methoxystyrene;
         and have either a glass transition temperature of -40°C to 5°C; or, if the acrylate copolymers have a core/shell structure a glass transition temperature of the inner core of -60°C to 5°C and of the outer shell of 20°C to 150°C; and
   (ii) the ethylene vinyl acetate polymers consist of vinyl acetate, ethylene and acrylic acid and have a glass transition temperature of -25°C to -5°C.

Seed treatment is a promising method for the protection of seeds against pests (fungi and insects) suitable for crop seeds such as those selected from the group of corn (sweet and field), soybean, wheat, barley, oats, rice, cotton, sunflower, alfalfa, sorghum, rapeseed, sugarbeet, Brassica spp., tomato, bean, carrot, tobacco and flower seed, for example, pansy, impatiens, petunia and geranium as described by Japan Plant Protection Association (p. 133-139 "Pesticide Application Technology". 1998).

One of the problems the farmer is faced with is the fast release of the pesticidal agent used for seed treatment in the soil or in the water. Especially in rice seed treatment (e.g. in a seed soaking process), the release of the pesticidal agent is a huge problem because of environmental safety on the one hand and the loss of protection by the pesticidal agent against soil bom fungi and insects on the other hand.

WO 01/78507 discloses a rice seed treatment formulation used in a non-soaking process, employing the polyvinylacetates, polyvinlyaclohols, polyvinylpyrrolidones and mixtures of polyurethanes as polymers for the seed treatment formulation.

WO 02/080675 discloses seed treatment formulations disclosing a wide range of polymers suitable for seed treatment formulation sharing no common chemical features.

All of the afore-mentioned formulations show release of the pesticidal agent into the environment.

Thus, it is an object of the present invention to provide a formulation for seed treatment, which keeps the pesticidal agent on the seed and prevents significant release into the environment (the water or the soil), preferably during a seed soaking and/or priming process.

This object is achieved in the present invention by providing a seed treatment formulation comprising
(a) at least one pesticidal agent; and
(b) a carboxyl group containing polymer or copolymer, wherein selected from the group consisting of styrene butadiene rubber latex polymers with a glass transition temperature of -40°C to 5°C, acrylate copolymers and ethylene vinyl acetate copolymers, wherein
   (i) the acrylate copolymers consist of
      (a') acrylic acid, methacrylic acid or itaconic acid or a combination of at least two monomers selected from the group consisting of acrylic acid, methacrylic acid or itaconic acid; and
      (b') monomers selected from the group consisting of alkyl (meth)acrylates such as methyl (meth)acrylate, ethyl (meth)acrylate, n-propyl (meth)acrylate, n-butyl meth)acrylate, t-butyl (meth)acrylate, lauryl (meth)acrylate, cyclohexyl (meth)acrylate 2-ethylhexyl (meth)acrylate, stearyl (meth)acrylate, dodecyl(meth)acrylate and (meth)acrylamides such as dimethyl(meth)acrylamide, diethyl(meth)acrylamide, isopropyl(meth)acrylamide,(meth)acryloyl morpholine, dimethylaminomethyl(meth)acrylamide, dimethylaminoethyl(meth)acrylamide, dimethylaminopropyl(meth)acrylamide, diethylaminomethyl(meth)acrylamide, diethylaminoethyl(meth)acrylamide, diethylaminopropyl(meth)acrylamide; and
      (c') monomers selected from the group consisting of 2-hydroxyethyl acrylate, 2-hydroxypropyl acrylate, 2-hydroxyethyl methacrylate, 2-hydroxypropyl methacrylate, glycidyl (meth)acrylate; and
      (d') monomers selected from the group consisting of styrene and styrene derivatives such as styrene, α-methyl styrene, o-methyl styrene, m-methyl styrene p-methyl styrene, p-t-butyl styrene, p-chloromethyl styrene, p-styrenesulfonic acid and its sodium or potassium salt, o-methoxystyrene, m-methoxystyrene, p-methoxystyrene;
         and have either a glass transition temperature of -40°C to 5°C; or, if the acrylate copolymers have a core/shell structure a glass transition temperature of the inner core of -60°C to 5°C and of the outer shell of 20°C to 150°C; and
   (ii) the ethylene vinyl acetate polymers consist of vinyl acetate, ethylene and acrylic acid and have a glass transition temperature of -25°C to -5°C.

In a preferred embodiment, the content of the carboxyl group r is at least between 0.05% (w/w) and 20% (w/w), preferably between 0.05% (w/w) and 5% (w/w), more preferably between 0, 1 % (w/w) and 3% (w/w).

Acrylate copolymers according to the present invention are those comprising
(a) acrylic acid, methacrylic acid or itaconic acid or a combination of at least two monomers selected from the group consisting of acrylic acid, methacrylic acid or itaconic acid; and
(b) monomers selected from the group consisting of alkyl (meth)acrylates such as methyl (meth)acrylate, ethyl (meth)acrylate, n-propyl (meth)acrylate, n-butyl meth)acrylate, t-butyl (meth)acrylate, lauryl (meth)acrylate, cyclohexyl (meth)acrylate 2-ethylhexyl (meth)acrylate, stearyl (meth)acrylate, dodecyl(meth)acrylate and (meth)acrylamides such as dimethyl(meth)acrylamide, diethyl(meth)acrylamide, isopropyl(meth)acrylamide,(meth)acryloyl morpholine, dimethylaminomethyl(meth)acrylamide, dimethylaminoethyl(meth)acrylamide, dimethylaminopropyl(meth)acrylamide, diethylaminomethyl(meth)acrylamide, diethylaminoethyl(meth)acrylamide, diethylaminopropyl(meth)acrylamide; and
(c) monomers selected from the group consisting of 2-hydroxyethyl acrylate, 2-hydroxypropyl acrylate, 2-hydroxyethyl methacrylate, 2-hydroxypropyl methacrylate, glycidyl (meth)acrylate; and
(d) monomers selected from the group consisting of styrene and styrene derivatives such as styrene, α-methyl styrene, o-methyl styrene, m-methyl styrene p-methyl styrene, p-t-butyl styrene, p-chloromethyl styrene, p-styrenesulfonic acid and its sodium or potassium salt, o-methoxystyrene, m-methoxystyrene, p-methoxystyrene.

Preferred acrylate copolymers are those comprising
(a) either acrylic acid, methacrylic acid or itaconic acid or a combination of at least two monomers selected from the group consisting of acrylic acid, methacrylic acid or itaconic acid; and
(b) alkyl (meth)acrylates such as methyl (meth)acrylate, ethyl (meth)acrylate, n-butyl (meth)acrylate, cyclohexyl (meth)acrylate, 2-ethylhexyl (meth)acrylate or (meth)acrylamide; and
(c) 2-hydroxyethyl acrylate, 2-hydroxypropyl acrylate, 2-hydroxypropyl acrylate or 2-hydroxypropyl methacrylate; and
(d) styrene.

More preferred are those acrylate copolymers comprising
(a) either acrylic acid, methacrylic acid or itaconic acid or a combination of at least two Monomers selected from the group consisting of acrylic acid, methacrylic acid or itaconic acid; and
(b) methyl methacrylate, ethyl acrylate, n-butyl acrylate, cyclohexyl methacrylate, 2-ethylhexyl acrylate or (meth)acrylamide; and
(d) styrene.

Most preferred are those acrylate copolymers with a composition of
(a) acrylic acid, methacrylic acid or itaconic acid or a combination of at least two monomers selected from the group consisting of acrylic acid, methacrylic acid or itaconic acid, from 0.2 % (w/w) to 6% (w/w); and
(b) methyl methacrylate, ethyl acrylate, n-butyl acrylate, cyclohexyl methacrylate, 2-ethylhexyl acrylate or (meth)acrylamide from 50 % (w/w) to 99.8 % (w/w); and
(d) styrene 0% (w/w) to 50% (w/w).

In a particular preferred embodiment, the acrylate copolymers have a core shell structure. These acrylate copolymers can be prepared by known techniques, for example by a step by step emulsion polymerization technique.

In a first step the core polymers are prepared with monomers of acrylate copolymers (for definition see above) by an emulsion polymerization method. In a second step, monomers of acrylate copolymers (for definition see above) are polymerised in the presence of the dispersed core acrylate copolymers that have been prepared in the first step to generate the shell structure (see for example Wagner et al, Polymer Chemistry & Technology, Publication of Unversity of Warwick, Center for Interfaces and Materials available under http://www2.warwick.ac.uk/fac/sci/chemistry/cim/research /haddleton/posters/gordon03charlie.pdf).

The acrylate copolymers set forth above not having a core shell structure have a glass transition temperature of -40°C to 15°C, preferably of -30°C to 10°C, more preferably -30°C to 5°C, most preferably -25°C to -5°C.

The inner core of the acrylate copolymers with core shell structure has a glass transition temperature (Tg) of -60°C to 5°C, preferably of -40°C to 0°C, more preferably of - 30°C to -5°C.

The outer shell of the acrylate copolymers with core shell structure has a Tg of 20°C to 150°C, preferably of 80°C to 130°C.

Ethylene vinyl acetate polymers according to the present invention are consisting mainly of ethylene and vinyl acetate and may also comprise acrylic acid. The ethylene vinyl acetate polymers according to the present invention have a glass transition temperature of -25°C to -5°C.
Most preferred are those ethylene vinyl acetate copolymers with a composition of ethylene from 10% (w/w) to 40% (w/w) and vinyl acetate from 60% (w/w) to 90% (w/w) and acrylic acid from 0% (w/w) to 4% (w/w).

The above-mentioned vinyl acetate copolymers may be also partially hydrolysed to the respective vinyl alcohols.

Styrene butadiene rubber latex polymers according to the present invention comprise
(1) (alkyl)acrylic acid and (alky) acrylic acid ester derivates such as
   a) alkyl (meth)acrylates such as methyl (meth)acrylate, ethyl (meth)acrylate, n-propyl (meth)acrylate, n-butyl (meth)acrylate, *t*-butyl (meth)acrylate, 2-ethylhexyl (meth)acrylate, stearyl (meth)acrylate, lauryl (meth)acrylate, cyclohexyl (meth)acrylate, stearyl (meth)acrylate, dodecyl (meth)acrylate, 2-hydroxyethyl (meth)acrylate, 2-hydroxypropyl (meth)acrylate,
   b) fluorinated alkyl (meth)acrylates such as fluoroalkyl (meth)acrylates; trifluoroethyl (meth)acrylate, pentafluoropropyl (meth)acrylate, heptafluorobutyl (meth)acrylate
   c) siloxanyl compound such as" ; trimethylsiloxanyl dimethylsilyl propyl (meth)acrylate, tris(trimethylsiloxanyl)silylpropyl(meth)acrylate, di(meth)acryloylpropyl dimethylsilyl ether;
   d) amino group containing (meth)acrylates such as dimethylaminomethyl(meth)acrylate, dimethylaminoethyl(meth)acrylate, dimethylaminopropyl(meth)acrylate, diethylaminomethyl(meth)acrylate, diethylaminopropyl(meth)acrylate
   e) mono- or di-(meth)acrylates of alkylene glycol such as mono- or di-(meth)acrylates of ethylene glycol, 1,2-propanediol, 1,3-propanediol, 1,6-hexanediol,
   f) alkoxyalkyl(meth)acrylates such as 2-methoxyethyl(meth)acrylate, 2-ethoxyethyl(meth)acrylate, 3-ethoxypropyl(meth)acrylate
   g) aryloxyalkyl(meth)acrylates such as 2-phenoxyethyl(meth)acrylate, 2-phenoxypropyl(meth)acrylate, 3-phenoxypropyl(meth)acrylate,
   h) oligo(meth)acrylates such as di(meth)acrylates, tri(meth)acrylates or tetra(meth)acrylates of polyhydric alcohols like glycerol, 1,2,4-butanetriol, pentaerythritol, trimethylolalkane (C1 - C3), tetramethlolalkane (C1 - C3);
   i) hydroxyalkyl(meth)acrylates such as 2-hydroxyethyl(meth)acrylate, 2-hydroxypropyl(meth)acrylate, 3-hydroxypropyl(meth)acrylate
   j) ring opening condensed (meth)acrylates of cyclic esters designated by the following formula (I)

      CH₂=CR⁴-COO-(CₘH₂ₘCOO)ₜ-R⁵ ··· (I)

      wherein
      R⁴ is C₁-C₅ alkyl, R⁵ is hydrogen or C₁-C₁₀ alkyl or a phenyl group, m and t is whole number of 1 to 10;
      such as
      CH₂=CH-COO-C₃H₆COO-H, CH₂=C(CH₃)-COO-C₃H₆COO-H, CH₂=CH-COO-C₄H₈COO-H, CH₂=C(CH₃)-COO-C₄H₈COO-H, CH₂=CH-COO-C₅H₁₀COO-H, CH₂=C(CH₃)-COO-C₅H₁₀COO-H, CH₂=CH-COO-C₃H₆COO-CH₃, CH₂=C(CH₃)-COO-C₃H₆COO-CH₃, CH₂=CH-COO-C₄H₈COO-CH₃, CH₂=C(CH₃)-COO-C₄H₈COO-CH₃, CH₂=CH-COO-C₅H₁₀COO-CH₃, CH₂=C(CH₃)-COO-C₅H₁₀COO-CH₃, CH₂=CH-COO-C₅H₁₀COO-C₂H₅, CH₂=C(CH₃)-COO-C₅H₁₀COO-C₂H₅, CH₂=CH-COO-C₅H₁₀COO-C₄H₉, CH₂=C(CH₃)-COO-C₅H₁₀COO-C₄H₉, CH₂=CH-COO-C₅H₁₀COO-C₈H₁₇, CH₂=C(CH₃)-COO-C₅H₁₀COO-C₈H₁₇, CH₂=CH-COO-(C₃H₆COO)₂-H, CH₂=C(CH₃)-COO-(C₃H₆COO)₂H, CH₂=CH-COO-(C₄H₈COO)₂-H, CH₂=C(CH₃)-COO-(C₄H₈COO)₂-H, CH₂=CH-COO-(C₅H₁₀COO)₂-H, CH₂=C(CH₃)-COO-(C₅H₁₀COO)₂-H, CH₂=CH-COO-(C₃H₆COO)₂-C₂H₅, CH₂=C(CH₃)-COO-(C₃H₆COO)₂-C₂H₅, CH₂=CH-COO-(C₄H₈COO)₂-C₂H₅, CH₂=C(CH₃)-COO-(C₄H₈COO)₂-C₂H₅, CH₂=CH-COO-(C₅H₁₀COO)₂-C₂H₅, CH₂=C(CH₃)-COO-(C₅H₁₀COO)₂-C₂H₅, CH₂=CH-COO-(C₅H₁₀COO)₃-C₂H₅, CH₂=C(CH₃)-COO-(C₅H₁₀COO)₃-C₂H₅, CH₂=CH-COO-(C₅H₁₀COO)₄-C₂H₅, CH₂=C(CH₃)-COO-(C₅H₁₀COO)₄-C₂H₅, CH₂=CH-COO-(C₅H₁₀COO)₅-C₂H₅, CH₂=C(CH₃)-COO-(C₅H₁₀COO)₅-C₂H₅, CH₂=CH-COO-(C₅H₁₀COO)₂-C₆H₁₇, CH₂=C(CH₃)-COO-(C₅H₁₀COO)₂-C₈H₁₇; and/or
(2) (Meth)acrylamides such as dimethyl(meth)acrylamide, diethyl(meth)acrylamide, isopropyl(meth)acrylamide,(meth)acryloyl morpholine, dimethylaminomethyl(meth)acrylamide, dimethylaminoethyl(meth)acrylamide, dimethylaminopropyl(meth)acrylamide, diethylaminomethyl(meth)acrylamide, diethylaminoethyl(meth)acrylamide, diethylaminopropyl(meth)acrylamide and derivatives of (meth)acrylamides such as N-methyl acrylamide, N-methylol acrylamide, N-methylol methacrylamide; and/or
(3) cyano(alky)acrylates such as cyanoalkyl(meth)acrylates; cyanoethyl(meth)acrylate, cyanopropyl(meth)acrylate;
   and/or
(4) acrylonitriles such as acrylonitrile, methacrylonitrile;
   and/or
(5) Unsaturated monocarboxylates such as methyl crotonate, ethyl crotonate, methyl cinnamate, ethyl cinnamate;
   and/or
(6) Hydroxy alkyl esters of unsaturated carboxylic acids such as 2-hydroxyethyl crotonate, 2-hydroxypropyl crotonate, 2-hydroxypropyl cinnamate, glycidyl (meth)acrylate;
   and/or
(7) Unsaturated (mono) carboxylic acids such as crotonic acid, cinnamic acids, maleic acid, itaconic acid;
   and/or
(8) Unsaturated polycarboxylic acids and their anhydrides, mono- or di-esters such as maleic acid, fumaric acid, itaconic acid, citraconic acid, and the anhydrides of the aforementioned acids;
   and/or
(9) Vinyl esters such as vinyl acetate, vinyl chloroacetate, vinyl propionate.
   and/or
(10) C₄-C₁₂-alkdienyl such as 1,3-butadiene, 2-Methyl-1,3-butadien (=isoprene), 2,3-dimethyl-1,3-butadiene, 1,3-pentadiene, 2-methyl-1,3-pentadiene, 1,3-hexadiene, 4,5-diethyl-1,3-octadiene, 3-butyl-1,3-octadiene;
   and/or
(11) vinyl pyridines such as 2-vinylpyridine, 4- vinylpyridine;
   and/or
(12) Styrene and styrene derivatives such as styrene, α-methyl styrene, o-methyl styrene, m-methyl styrene p-methyl styrene, p-t-butyl styrene, p-chloromethyl styrene, p-styrenesulfonic acid and its sodium or potassium salt, o-methoxystyrene, m-methoxystyrene, p-methoxystyrene.

The styrene butadiene rubber latex copolymers have a glass transition temperature of -40°C to 15°C, preferably of -30°C to 10°C, more preferably -30°C to 5°C, most preferably -25°C to -5°C.

Preferred are acrylate copolymers and ethylene vinyl acetate copolymers as defined above. The acrylate copolymers as defined above are the most preferred ones.

The glass transition temperature of the polymers, copolymers is determined by differential scanning calorimeter (DSC). All samples were dried at 110°C for one hour to eliminate the effect of water/solvent on Tg of copolymers. DSC sample size is about 10-15 mg. The measurement is usually carried out from -100°C to 100°C at 20°C/min under N₂-atomosphere. The Tg is determined by midpoint of the transition region.

All polymers and copolymers mentioned above, are herein below termed as "sticker" or "stickers".

The present invention comprises the use of a sticker for the preparation of a seed treatment formulation.

The pesticidal agent is either at least one fungicide or at least one insecticide or a mixture consisting of fungicide and at least one insecticide; or at least one herbicide and/or a safener or a mixture comprising a herbicide and/or a safener and at least one pesticidal agent selected from the group conisiting of fungicides and insecticides. Preferably, the active ingredient is at least one fungicide or at least one insecticide or a mixture consisting of at least one fungicide and at least one insecticide.

The term safener has the following meaning: It is known that in some cases better crop plant compatibility can be achieved by joint application of specifically acting herbicides with organic active compounds, some of which are themselves herbicidally active. In these cases, the active compounds act as antidote or antagonist, and, owing to the fact that they can reduce or even prevent damage to the crop plants, they are herein referred to as safeners.

The fungicide is selected from the group consisting of
- acylalanines such as benalaxyl, furalaxyl, metalaxyl, ofurace, oxadixyl,
- amine derivatives such as aldimorph, dodine, dodemorph, fenpropimorph, fenpropidin, guazatine, iminoctadine, spiroxamin, tridemorph
- anilinopyrimidines such as pyrimethanil, mepanipyrim or cyrodinyl,
- antibiotics such as cycloheximid, griseofulvin, kasugamycin, natamycin, polyoxin or streptomycin, validamycin A
- azoles such as bitertanol, bromuconazole, cyazofamide, cyproconazole, difenoconazole, dinitroconazole, epoxiconazole, etridazole, fenbuconazole, fluquiconazole, flusilazole, flutriafol, fuberidazole, hexaconazole, hymexazole, imazalil, imibenconazole, metconazole, myclobutanil, penconazole, perfurazoate, propiconazole, prochloraz, prothioconazole, simeconazole, tebuconazole, tetraconazole, thiabendazole triadimefon, triadimenol, triflumizol, triticonazole, 5-Chloro-7-(4-methyl-piperidin-1-yl)-6-(2,4,6-trifluoro-phenyl)-[1,2,4]triazolo[1,5-a]pyrimidine, 2-Butoxy-6-iodo-3-propyl-chromen-4-one, 3-(3-Bromo-6-fluoro-2-methyl-indole-1-sulfonyl)-[1,2,4]triazole-1-sulfonic acid dimethylamide,
- dicarboximides such as iprodion, myclozolin, procymidon, vinclozolin,
- dithiocarbamates such as ferbam, nabam, maneb, mancozeb, metam, metiram, propineb, polycarbamate, thiram, ziram, zineb,
- heterocyclic compounds such as anilazine, benomyl, boscalid, carbendazim, carboxin, oxycarboxin, cyazofamid, dazomet, dithianon, ethirimol, dimethirimol, famoxadon, fenamidon, fenarimol, fuberidazole, flutolanil, furametpyr, isoprothiolane, mepronil, nuarimol, octhilinone, probenazole, proquinazid, pyrifenox, pyroquilon, quinoxyfen, silthiofam, thiabendazole, thifluzamid, thiophanate-methyl, tiadinil, tricyclazole, triforine, 3-[5-(4-Chloro-phenyl)-2,3-dimethyl-isoxazolidin-3-yl]-pyridine, bupirimate
- copper fungicides such as Bordeaux mixture, copper acetate, copper hydroxide, copper oxychloride, basic copper sulfate,
- nitrophenyl derivatives such as binapacryl, dinocap, dinobuton, nitrophthalisopropyl
- phenylpyrroles such as fenpiclonil or fludioxonil,
- sulfur
- organometallic compounds such as fentin salts
- organophosphorous compounds such as edifenphos, Edifenphos, Iprobenfos, Pyrazophos, Tolclofos-methyl, Fosetyl, Fosetyl-aluminium, phosphorous acid
- other fungicides such as acibenzolar-S-methyl, benthiavalicarb, carpropamid, chlorothalonil, cyflufenamid, cymoxanil, dazomet, diclomezin, diclocymet, diethofencarb, ethaboxam, fenhexamid, fentin-acetate, fenoxanil, ferimzone, fluazinam, fosetyl, fosetyl-aluminum, iprovalicarb, hexachlorobenzene, metrafenon, pencycuron, propamocarb, phthalide, toloclofos-methyl, quintozene, zoxamid, isoprothiolane, probenfos, zoxamide, Fluopicolide (Picobenzamid); Carpropamid, Mandipropamid, N-(2-{4-[3-(4-Chloro-phenyl)-prop-2-ynyloxy]-3-methoxy-phenyl}-ethyl)-2-methanesulfonylamino-3-methyl-butyramide, N-(2-{4-[3-(4-Chloro-phenyl)-prop-2-ynyloxy]-3-methoxy-phenyl}-ethyl)-2-ethanesulfonylamino-3-methyl-butyramide; Furametpyr, Thifluzamide, Penthiopyrad, Fenhexamide, 3,4-Dichloroisothiazole-5-carboxylic acid (2-cyano-phenyl)-amide, Flubenthiavalicarb, 3-(4-Chloro-phenyl)-3-(2-isopropoxycarbonylamino-3-methyl-butyrylamino)-propionic acid methyl ester, {2-Chloro-5-[1-(6-methyl-pyridin-2-ylmethoxyimino)-ethyl]-benzyl}-carbamic acid methyl ester, {2-Chloro-5-[1-(3-methyl-benzyloxyimino)-ethyl]-benzyl}-carbamic acid methyl ester, flusulfamide, phthalide, hexachlorbenzene amides of following formula 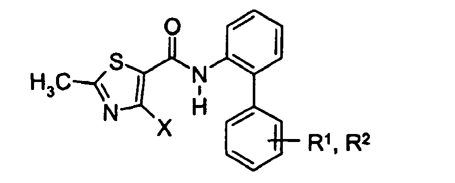
in which
X is CHF₂ or CH₃; and
R¹,R² are independently from each other halogen, methyl or halomethyl;
- strobilurins such as azoxystrobin, dimoxystrobin, enestroburin, fluoxastrobin, kresoxim-methyl, metominostrobin, orysastrobin, picoxystrobin, pyraclostrobin or trifloxystrobin,
- sulfenic acid derivatives such as captafol, captan, dichlofluanid, folpet, tolylfluanid,
- cinnemamides and analogs such as dimethomorph, flumetover or flumorph,
- amide fungicides such as cyclofenamid or (Z)-N-[α-(cyclopropylmethoxyimino)-2,3-difluoro-6-(difluoromethoxy)benzyl]-2-phenylacetamide;
   preferably benomyl, thiophanate-methyl, thiabendozole, ipconazole, triflumizole, pefurazoate, oxolinic acid, fludioxonil, thiram, copper hydroxide, copper oxide chloride, captan, kasugamycin, orysastrobin, mepronil, flutolanil, tolclofos-methyl, oxytetracycline, iminoctadine, epoxiconazole, fluquinconazole, metconazole, prochloraz, triticonazole, tebuconazole, probenazole, pyroquilon, acibenzolar-S-methyl, carpropamid, diclocymet, fenoxanil, azoxystrobin, dimoxystrobin, fluoxastrobin, kresoxim-methyl, metominostrobin, orysastrobin, picoxystrobin, pyraclostrobin or trifloxystrobin, tricyclazole, tiadinil, isoprothiolane, iprobenfos;
   more preferably benomyl, thiophanate-methyl, thiabendozole, ipconazole, triflumizole, prochloraz, pefurazoate, oxolinic acid, fludioxonil, thiram, copper hydroxide, copper oxide chloride, captan, kasugamycin, orysastrobin, probenazole, pyroquilon, acibenzolar-S-methyl, carpropamid, diclocymet, tiadinil, tricyclazole;
   most preferably orysastrobin.

The insecticide is selected from the group consisting of
Organophosphates: Acephate, Azinphos-methyl, Chlorpyrifos, Chlorfenvinphos, Diazinon, Dichlorvos, dimethylvinphos, dioxabenzofos, Dicrotophos, Dimethoate, Disulfoton, Ethion, EPN, Fenitrothion, Fenthion, Isoxathion, Malathion, Methamidophos, Methidathion, Methyl-Parathion, Mevinphos, Monocrotophos, Oxydemeton-methyl, Paraoxon, Parathion, Phenthoate, Phosalone, Phosmet, Phosphamidon, Phorate, Phoxim, Pirimiphos-methyl, Profenofos, Prothiofos, primiphos-ethyl, pyraclofos, pyridaphenthion, Sulprophos, Triazophos, Trichlorfon; tetrachlorvinphos, vamidothion;
Carbamates: Alanycarb, Benfuracarb, Bendiocarb, Carbaryl, BPMC, carbofuran, Carbosulfan, Fenoxycarb, Furathiocarb, Indoxacarb, Methiocarb, Methomyl, Oxamyl, Pirimicarb, Propoxur, Thiodicarb, Triazamate;
Pyrethroids: Bifenthrin, Cyfluthrin, cycloprothrin, Cypermethrin, Deltamethrin, Esfenvalerate, Ethofenprox, Fenpropathrin, Fenvalerate, Cyhalothrin, Lambda-Cyhalothrin, Permethrin, Silafluofen, Tau-Fluvalinate, Tefluthrin, Tralomethrin, alpha-cypermethrin, zeta-cypermethrin, permethrin;
Neonicotinoides: acetamiprid, clothianidin, Dinotefuran, Flonicamid, Imidacloprid, Nitenpyram, Thiamethoxam, thiacloprid;
Arthropod growth regulators: a) chitin synthesis inhibitors: benzoylureas: Chlorfluazuron, Diflubenzuron, Flucycloxuron, Flufenoxuron, Hexaflumuron, Lufenuron, Novaluron, Teflubenzuron, Triflumuron; Buprofezin, Diofenolan, Hexythiazox, Etoxazole, Clofentazine; b) ecdysone antagonists: Halofenozide, Methoxyfenozide, Tebufenozide; c) juvenoids: Pyriproxyfen, Methoprene, Fenoxycarb; d) lipid biosynthesis inhibitors: Spirodiclofen;

Various: Abamectin, Acequinocyl, Amitraz, Azadirachtin, bensultap Bifenazate, Cartap, Bensultap,Chlorfenapyr, Chlordimeform, Cyromazine, Diafenthiuron, Diofenolan, Emamectin benzoate, Endosulfan, Ethiprole, Fenazaquin, Fipronil, Formetanate, Formetanate hydrochloride, gamma-HCH Hydramethylnon, Indoxacarb, isoprocarb, metolcarb, nitenpyram, Pyridaben, Pymetrozine, Spinosad, Sulfur, Tebufenpyrad, Thiocyclam, XMC, xylylcarb, Pyridalyl, Pyridalyl, Flonicamid, Fluacypyrim, Milbemectin, Spiromesifen, Flupyrazofos, NC 512, Tolfenpyrad, Flubendiamide, Bistrifluron, Benclothiaz, Pyrafluprole, Pyriprole, Amidoflumet, Flufenerim, Cyflumetofen, Acequinocyl, Lepimectin, Profluthrin, Dimefluthrin, Amidrazone, Metaflumizone, N-Ethyl-2,2-dichloro-1-methylcyclo-propanecarboxamide-2-(2,6-dichloro- a,a,a -tri-fluoro-p-tolyl)hydrazone, a tetronic acid of the following formula 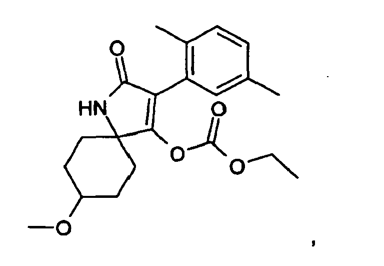 an aminoiso-thiazole of the following formula 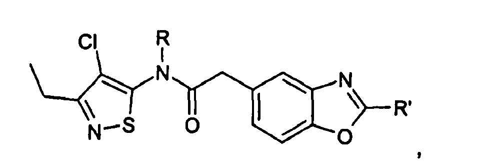 in which
R is -CH₂O CH₃ or H; and
R is -CF₂CF₂ CF₃;
an anthranilamide of the following formula 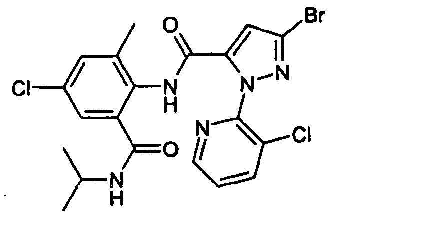 and an insecticdally active compound of the following formula; 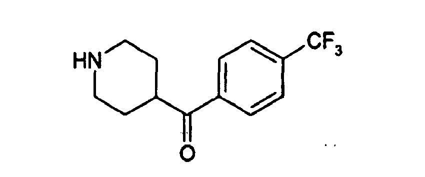 preferably selected from the group consisting of Acephate, Chlorpyrifos, Chlorfenvinphos, Malathion, Benfuracarb, Bendiocarb, carbofuran, Carbosulfan, Furathiocarb, Methiocarb, Thiodicarb; Bifenthrin, Tefluthrin, alpha-cypermethrin ,permethrin, acetamiprid, clothianidin, Dinotefuran, Ethiprole, Fipronil, gamma-HCH, Imidacloprid, Spinosad, Thiamethoxam and thiacloprid, Cartap, Bensultap, Thiocyclam, Nitenpyram, Buprofezin, Pymetrozine, Fenitrothion, Diazinon, BPMC, Fenthion, Flonicamid;
more preferably Fipronil, Benfuracarb, Bendiocarb, Carbosulfan, Furathiocarb, Permethrin, Acetamiprid, Clothianidin, Dinotefuran, Ethiprole, Imidacroprid, Spinosad, Thiamethoxam, Thiacloprid, Emamectin benzoate;
most preferably Fipronil.

The herbicide is selected from the group consisting of
b1) lipid biosynthesis inhibitors such as chlorazifop, clodinafop, clofop, cyhalofop, diclofop, fenoxaprop, fenoxaprop-p, fenthiaprop, fluazifop, fluazifop-P, haloxyfop, haloxyfop-P, isoxapyrifop, metamifop, propaquizafop, quizalofop, quizalofop-P, trifop, alloxydim, butroxydim, clethodim, cloproxydim, cycloxydim, profoxydim, sethoxydim, tepraloxydim, tralkoxydim, butylate, cycloate, diallate, dimepiperate, EPTC, esprocarb, ethiolate, isopolinate, methiobencarb, molinate, orbencarb, pebulate, prosulfocarb, sulfallate, thiobencarb, tiocarbazil, triallate, vernolate, benfuresate, ethofumesate and bensulide;
b2) ALS inhibitors such as amidosulfuron, azimsulfuron, bensulfuron, chlorimuron, chlorsulfuron, cinosulfuron, cyclosulfamuron, ethametsulfuron, ethoxysulfuron, flazasulfuron, flupyrsulfuron, foramsulfuron, halosulfuron, imazosulfuron, iodosulfuron, mesosulfuron, metsulfuron, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, imazamethabenz, imazamox, imazapic, imazapyr, imazaquin, imazethapyr, cloransulam, diclosulam, florasulam, flumetsulam, metosulam, penoxsulam, bispyribac, pyriminobac, propoxycarbazone, flucarbazone, pyribenzoxim, pyriftalid and pyrithiobac;
b3) photosynthesis inhibitors such as atraton, atrazine, ametryne, aziprotryne, cyanazine, cyanatryn, chlorazine, cyprazine, desmetryne, dimethametryne, dipropetryn, eglinazine, ipazine, mesoprazine, methometon, methoprotryne, procyazine, proglinazine, prometon, prometryne, propazine, sebuthylazine, secbumeton, simazine, simeton, simetryne, terbumeton, terbuthylazine, terbutryne, trietazine, ametridione, amibuzin, hexazinone, isomethiozin, metamitron, metribuzin, bromacil, isocil, lenacil, terbacil, brompyrazon, chloridazon, dimidazon, desmedipham, phenisopham, phenmedipham, phenmedipham-ethyl, benzthiazuron, buthiuron, ethidimuron, isouron, methabenzthiazuron, monoisouron, tebuthiuron, thiazafluron, anisuron, buturon, chlorbromuron, chloreturon, chlorotoluron, chloroxuron, difenoxuron, dimefuron, diuron, fenuron, fluometuron, fluothiuron, isoproturon, linuron, methiuron, metobenzuron, metobromuron, metoxuron, monolinuron, monuron, neburon, parafluron, phenobenzuron, siduron, tetrafluron, thidiazuron, cyperquat, diethamquat, difenzoquat, diquat, morfamquat, paraquat, bromobonil, bromoxynil, chloroxynil, iodobonil, ioxynil, amicarbazone, bromofenoxim, flumezin, methazole, bentazone, propanil, pentanochlor, pyridate, and pyridafol;
b4) protoporphyrinogen-IX oxidase inhibitors such as acifluorfen, bifenox, chlomethoxyfen, chlornitrofen, ethoxyfen, fluorodifen, fluoroglycofen, fluoronitrofen, fomesafen, furyloxyfen, halosafen, lactofen, nitrofen, nitrofluorfen, oxyfluorfen, fluazolate, pyraflufen, cinidon-ethyl, flumiclorac, flumioxazin, flumipropyn, fluthiacet, thidiazimin, oxadiazon, oxadiargyl, azafenidin, carfentrazone, sulfentrazone, pentoxazone, benzfendizone, butafenacil, pyraclonil, profluazol, flufenpyr, flupropacil, nipyraclofen and etnipromid;
b5) bleacher herbicides such as metflurazon, norflurazon, flufenican, diflufenican, picolinafen, beflubutamid, fluridone, flurochloridone, flurtamone, mesotrione, sulcotrione, isoxachlortole, isoxaflutole, benzofenap, pyrazolynate, pyrazoxyfen, benzobicyclon, amitrole, clomazone, aclonifen, 4-(3-trifluoromethylphenoxy)- 2-(4-trifluoromethylphenyl)pyrimidine, and also 3-heterocyclyl-substituted benzoyl derivatives of the formula II (see in WO 96/26202, WO 97/41116, WO 97/41117 and WO 97/41118) 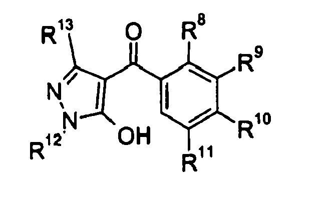 in which the variables R⁸ to R¹³ are as defined below:
   R⁸, R¹⁰ are hydrogen, halogen, C₁-C₆-alkyl, C₁-C₆-haloalkyl, C₁-C₆-alkoxy, C₁-C₆-haloalkoxy, C₁-C₆-alkylthio, C₁-C₆-alkylsulfinyl or C₁-C₆-alkylsulfonyl;
   R⁹ is a heterocyclic radical selected from the group consisting of such as thiazol-2-yl, thiazol-4-yl, thiazol-5-yl, isoxazol-3-yl, isoxazol-4-yl, isoxazol-5-yl, 4,5-dihydroisoxazol-3-yl, 4,5-dihydroisoxazol-4-yl and 4,5-dihydroisoxazol-5-yl, where the nine radicals mentioned may be unsubstituted or mono- or polysubstituted, e.g. mono-, di-, tri- or tetrasubstituted, by halogen, C₁-C₄-alkyl, C₁-C₄-alkoxy, C₁-C₄-haloalkyl, C₁-C₄-haloalkoxy or C₁-C₄-alkylthio;
   R¹¹ is hydrogen, halogen or C₁-C₆-alkyl;
   R¹² is C₁-C₆-alkyl;
   R¹³ is hydrogen or C₁-C₆-alkyl.
b6) EPSP synthase inhibitors such as glyphosate;
b7) glutamine synthase inhibitors such as glufosinate and bilanaphos;
b8) DHP synthase inhibitors such as asulam;
b9) mitose inhibitors such as benfluralin, butralin, dinitramine, ethalfluralin, fluchloralin, isopropalin, methalpropalin, nitralin, oryzalin, pendimethalin, prodiamine, profluralin, trifluralin, amiprofos-methyl, butamifos, dithiopyr, thiazopyr, propyzamide, tebutam, chlorthal, carbetamide, chlorbufam, chlorpropham and propham;
b10) VLCFA inhibitors such as acetochlor, alachlor, butachlor, butenachlor, delachlor, diethatyl, dimethachlor, dimethenamid, dimethenamid-P, metazachlor, metolachlor, S-metolachlor, pretilachlor, propachlor, propisochlor, prynachlor, terbuchlor, thenylchlor, xylachlor, allidochlor, CDEA, epronaz, diphenamid, napropamide, naproanilide, pethoxamid, flufenacet, mefenacet, fentrazamide, anilofos, piperophos, cafenstrole, indanofan and tridiphane;
b11) cellulose biosynthesis inhibitors such as dichlobenil, chlorthiamid, isoxaben and flupoxam;
b12) decoupler herbicides such as dinofenate, dinoprop, dinosam, dinoseb, dinoterb, DNOC, etinofen and medinoterb;
b13) auxin herbicides such as clomeprop, 2,4-D, 2,4,5-T, MCPA, MCPA thioethyl, dichlorprop, dichlorprop-P, mecoprop, mecoprop-P, 2,4-DB, MCPB, chloramben, dicamba, 2,3,6-TBA, tricamba, quinclorac, quinmerac, clopyralid, fluroxypyr, picloram, triclopyr and benazolin;
b14) auxin transport inhibitors such as naptalam, diflufenzopyr;
b15) benzoylprop, flamprop, flamprop-M, bromobutide, chlorflurenol, cinmethylin, methyldymron, etobenzanid, fosamine, metam, pyributicarb, oxaziclomefone, dazomet, triaziflam and methyl bromide.
   preferably from
   butylate, diallate, methiobencarb, molinate, prosulfocarb, thiobencarb, triallate, ethofumesate, cyclosulfamuron, iodosulfuron, mesosulfuron, metsulfuron, prosulfuron, triasulfuron, imazamox, imazapic, imazapyr, imazaquin, imazethapyr, metosulam, atrazine, ametryne, cyanazine, terbuthylazine, terbutryne, metamitron, metribuzin, lenacil, chloridazon, chlorotoluron, dimefuron, diuron, fluometuron, isoproturon, linuron, monolinuron, neburon, propanil, sulfentrazone, diflufenican, picolinafen, flurochloridone, flurtamone, mesotrione, isoxaflutole, clomazone, glyphosate, glufosinate, asulam, benfluralin, butralin, ethalfluralin, pendimethalin, trifluralin, propyzamide, carbetamide, acetochlor, alachlor, butachlor, dimethenamid, dimethenamid-P, metazachlor, metolachlor, S-metolachlor, pretilachlor, propachlor, napropamide, flufenacet, mefenacet, tridiphane, isoxaben, flupoxam, dicamba, quinclorac, quinmerac, picloram, cinmethylin, metam and dazomet.

The safener is selected from the group consisting of
benoxacor, cloquintocet, cyometrinil, dichlormid, dicyclonon, dietholate, fenchlorazole, fenclorim, flurazole, fluxofenim, furilazole, isoxadifen, mefenpyr, mephenate, naphthalic anhydride, 2,2,5-trimethyl-3-(dichloroacetyl)-1,3-oxazolidine (R-29148), 4-(dichloroacetyl)-1-oxa-4-azaspiro[4.5]decane (AD-67; MON 4660) and oxabetrinil.

Furthermore, the formulation optionally comprises formulation auxiliaries such as
(a) surfactants such as Alkyl benzene sulfonate, polyoxyethylene fatty alcohol ethers, Lignosulfonate, Alkyl naphthalene sulfonate, Naphthalene sulfonate-formaldehyde condensate, Alkyl naphthalene sulfonate-formaldehyde condensate, Phenolsulfonic acid formaldehyde polycondensate as sodium salt, Polyoxyethylene alkyl ether, Polyoxyethylene alkyl ether sulfate, Polyoxyethylene alkyl ether phosphate, Polyoxyethylene alkyl phenyl ether, Polyoxyethylene alkyl phenyl ether sulfate, Polyoxyethylene alkyl aryl ether sulfate, Polyoxyethylene alkyl aryl ether phosphate, Polyoxyethylene alkyl aryl phenyl ether, Polyoxyethylene styrylphenylether sulfate, Polyoxyethylene styrylphenyl ether, Polyoxyethylene alkyl ester, Polyethylene glycol monomethyl ether, Polyoxyethylene sorbitan alkylate, Polyoxyethylene styrylphenyl ether polymer, Polyoxyalkylene gylcol, Polycarboxylates, Phenol sulfonates, Alkyl sulfates, Dialkyl sulfosuccinates, Alkyl ether sulfates, Acetylene glycols and mixtures thereof, wherein mixtures of polyoxyethylene styrylphenylether, Sulfate and phenolsulfonic acid formaldehyde polycondensate as sodium salt are preferred;
(b) a solvent such as water, aromatic solvents (for example Solvesso products, xylene), paraffins (for example mineral fractions), alcohols (for example methanol, butanol, pentanol, benzyl alcohol), ketones (for example cyclohexanone, gamma-butyrolactone), pyrrolidones (NMP, NOP), DMSO, acetates (glycol diacetate), glycols, fatty acid dimethylamides, fatty acids and fatty acid esters. In principle, solvent mixtures may also be used; the preferred solvent is water;
(c) carriers (for solid formulation)/ filler or vehicle (for liquid formulation) such as ground natural minerals (for example kaolins, clays, talc, chalk), ground synthetic minerals (for example highly disperse silica, silicates) or solvents as listed above in (b);
(d) thickener (or agent of suspension) such as sodium carboxymethyl cellulose, methyl cellulose, ethyl cellulose, polyvinylalcohol, Sodium alginate, Sodium poly acrylate, Xanthan gum, Welan gum, Gum arabic, Montmorillonite, Lignosulfonates, Hydroxy methyl cellulose, Dextrin, Starch and mixtures thereof;
(e) anti-freezing agents such as glycerin, ethylene glycol, propylene glycol, preferably propylene glycol
(f) anti-foaming agents such as Silicone oils, mineral oils, Fatty acid ester;
(g) biocide such as sodium benzoate, 1,2-benzisothiazoline -3-one, 2-methyl-4-isothiazolin-3-one, 5-chloro-2-methyl-4-isothiazolin-3-one, potassium sorbate, parahydroxy benzoates, The preferred biocides are 1,2-benzisothiazoline-3-one and 2-methyl-4-, isothiazolin-3-one.

Optionally, also pigments can be included in the formulation. Suitable pigments or dyes for seed treatment formulations are pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Conventional seed treatment formulations include for example flowable concentrates FS, solutions LS, powders for dry treatment DS, water dispersible powders for slurry treatment WS, water-soluble powders SS and emulsion ES and EC. Application to the seeds is carried out before sowing, either directly on the seeds or after having pregerminated the latter, more preferably as FS formulation.

In the seed treatment formulation the amount of sticker is between 0.1 and 15 % (w/w), preferably between 0.5 and 12 % (w/w), most preferably 1.0-8% (w/w) on a solid content base.

The amounts of the pesticidal agent and formulation auxiliaries vary from formulation type to formulation type. The skilled artisan is familiar with the determination of the amounts necessary for the respective formulation.

For example, a FS formulation for seed treatment, e.g. for rice typically comprises; from 0.5 to 80% of the pesticidal agent; from 0.5 to 20 % of a surfactant (a); from 0.1 to 5 % of a thickener (d); from 5 to 20 % of an anti-freeze agent (e); from 0.1 to 2 % of an antifoam agent (f); from 0% to 75 % of a filler/vehicle (c); and from 0.01 to 1 % of a biocide (g); and from 0 to 20 % of a pigment and/or a dye. To this formulation, a sticker can be then added in the amounts set forth above.

The preparation of the respective formulations is known by the skilled artisan (see e.g. for review US 3,060,084, EP-A 707 445 (for liquid concentrates), Browning, "Agglomeration", Chemical Engineering, Dec. 4, 1967, 147-48, Perry's Chemical Engineer's Handbook, 4th Ed., McGraw-Hill, New York, 1963, pages 8-57 and et seq. WO 91/13546, US 4,172,714, US 4,144,050, US 3,920,442, US 5,180,587, US 5,232,701, US 5,208,030, GB 2,095,558, US 3,299,566, Klingman, Weed Control as a Science, John Wiley and Sons, Inc., New York, 1961, Hance et al., Weed Control Handbook, 8th Ed., Blackwell Scientific Publications, Oxford, 1989 and Mollet, H., Grubemann, A., Formulation technology, Wiley VCH Verlag GmbH, Weinheim (Germany), 2001, 2. D. A. Knowles, Chemistry and Technology of Agrochemical Formulations, Kluwer Academic Publishers, Dordrecht, 1998 (ISBN 0-7514-0443-8).

The sticker can be used in form of an emulsion, dispersion or solution in a solvent as defined above.

In one embodiment of the invention, a seed treatment formulation can be prepared based on the sticker, pesticidal agent and optionally the formulation auxiliaries.

In an other embodiment of the invention, a formulation can be prepared based on the pesticidal agent and optionally the formulation auxiliaries mentioned above in a first step. Alternatively, a commercial available formulation can be used. In a second step, the sticker is added to the prepared formulation comprising at least one pesticidal agent and the formulation auxiliaries or to the commercial available formulation. This method is suitable not only for solid formulations, which are, in a first step dispersed in water, to which afterwards the sticker is added, but also for the liquid formulations, which are, in a first step dispersed/diluted in water, to which afterwards the sticker is added.

In an other embodiment, the formulation comprising formulation auxilaries and at least one pesticidal agent (or a commercial available formulation) and a sticker solution are applied to the seeds together or consecutively.

All embodiments of the seed treatment formulation mentioned above are herein below termed as "formulation according to the invention".

The formulation according to the invention can be used for the treatment of crop seeds such as those selected from the group of field crop seeds, such as com/maize (sweet and field), durum wheat, soybean, wheat, barley, oats, rye, triticale, rice, cotton, sunflower, potato, pasture, alfalfa, grasses, turf, sorghum, rapeseed, Brassica spp., and sugar beet, vegetable crop seeds, such as tomato, lettuce, iceberg lettuce, pepper, cucumber, squash, melon, bean, peas, leek, garlic, onion, cabbage, carrot, tuber such as sugar cane, special crops seeds, such as tobacco, and ornamental seed, for example, pansy, impatiens, petunia and geranium, preferably seeds, which can be treated with seed treatment formulations in a seed priming process, such as vegetable crop seeds, special corp seeds such as tobacco and ornamental seed; sugar beet, corn and rice; most preferably for rice.

The invention furthermore comprises seeds treated with a formulation according to the invention, wherein preferably the seeds are selected from the group consisting of the group of field crop seeds, such as corn/maize (sweet and field), durum wheat soybean, wheat, barley, oats, rye, triticale, rice, cotton, sunflower, potato, pasture, alfalfa, grasses, turf, sorghum, rapeseed, Brassica spp., and sugar beet, vegetable crop seeds, such as tomato, lettuce, iceberg lettuce, pepper, cucumber, squash, melon, bean, peas, leek, garlic, onion, cabbage, carrot, tuber such as sugar cane, special crops seeds, such as tobacco, and ornamental seed, for example, pansy, impatiens, petunia and geranium, preferably seeds, which can be treated with seed treatment formulations in a seed priming process, such as vegetable crop seeds, special corp seeds such as tobacco and ornamental seed, sugar beet, corn and rice; most preferably rice.

The seeds can be hulled, unhulled or partly hulled, preferably hulled.

The present invention also comprises seeds treated with a formulation according to the present invention.

The invention furthermore comprises a method for the treatment of seeds prior sowing with a formulation according to the present invention comprising the following steps:
a) applying to a solvent a formulation according to the invention; and
b) applying to a seed the mixture obtained in step a).

In a preferred embodiment, the solvent is water. As mentioned above, it is also possible to apply a formulation (e.g. a commercial available formulation) and the sticker separately to the seeds, which means that formulation and a sticker, which is optionally diluted in a solvent e.g. water are applied together or in succession.

In a further embodiment of the invention, the seed can be treated with a formulation according to the invention and/or a formulation (e.g. a commercial available formulation comprising one, two or more pesticidal agent(s)) not comprising a sticker.

For example, seeds can be treated
(a) with a formulation not comprising a sticker, whereby a first layer is generated containing the formulation without the sticker; then afterwards treated with a formulation according to the invention whereby a second layer is generated, which contains the sticker; or
(b) the seed is first treated with a formulation according to the invention, whereby a first layer is generated containing the sticker; and afterwards treated with a formulation (e.g. a commercial available formulation comprising one, two or more pesticidal agent(s)), whereby a second layer is generated containing the formulation without the sticker; or
(c) several layers of formulation(s) according to the present invention, wherein
   (1) a first formulation according to the present invention comprising one, two or more pesticidal agent(s) is applied to the seed whereby a fist layer is generated containing the formulation; and afterwards
   (2) a second formulation according to the present invention comprising one, two or more pesticidal agent(s), which differs from the first formulation (step 1) with respect to the pesticidal agent(s) is applied to the seed, whereby a second layer is generated containing the second formulation (step 2);

Optionally, a third layer can be generated applying a third formulation different from the first and second formulation of step (1) and (2) of the above-mentioned coated seeds (a), (b) or (c).

In a preferred embodiment, there are basically four methods for the treatment of seeds with a formulation according to the invention, namely submergence or soaking, coating, dry seed treatment and spray seed treatment (for review see e.g. Japan Plant Protection Association (p. 133-139 "Pesticide Application Technology", 1998; ASGROW Reports: Seed treatments: Trends and Opportunities, 2002):
1. Submergence is most commonly applied for rice seed. According to the method, the seed are cleaned and packed in a bag that is sunk into the equivalent volume of chemical solution with seed volume, wherein the chemical solution normally is obtained by the dilution of a formulation such as FS, LS, DS, WS, SS and ES. Afterwards, the seed are dried.
2. Coating is most commonly used for rice, vegetable, potato, bulb. According to this method the seeds are cleaned and afterwards coated with a diluted formulation (e.g. 0,5% of WP formulation in water) by using rotating pot-mixer for about three minutes and followed by reversible rotation. Afterwards, the seeds are dried.
3. For dried seed treatment, a slightly diluted formulation is diluted with water in a mixer (e.g. 2% water is added with WP in a mixer), the seeds are afterwards added, incubated.
4. Spray seed treatment is a method usually used for treating large volume of rice seeds. For this purpose, a solution obtained by dilution of a formulation (e.g. a FS, LS, DS, WS, SS and ES) is sprayed continuously on seed in a spray chamber automatically measured and supplied from hopper, then dried at elevated temperature (e.g. 40°C) in dryer room.

In a particular preferred embodiment of the invention, the seeds can treated with a formulation according to the present invention in a seed priming process (for review see: ASGROW Reports: Seed treatments: Trends and Opportunities, 2002; Khan et al.: International Journal of Agricultural Botany, 2003; SeedQuest@seedquest.com. Typically, such process comprises the following steps:
- hydration of seeds under controlled conditions followed by germination of seeds under controlled conditions;
- treatment of seeds with a formulation according to the present invention;
   wherein depending on the respective process the hydration can be done in first and the treatment of seeds with a formulation according to the present invention in a second step or, alternatively, the treatment of seeds with a formulation according to the present invention can be done first followed by the hydration of seeds. For rice seed treatment, the treatment of seeds with a formulation according to the present invention is preferably done first followed by the hydration of seeds.

The treatment of seeds with a formulation according to the present invention can be done as explained above.

The seed priming process or "pre-sowing hydration treatment" is a seed enhancement process for improving the germination characteristics of seeds. Priming is accomplished by partially hydrating seed and maintaining it under defined moisture, temperature and aeration conditions for a prescribed period of time. For such process, the seeds are treated with precisely controlled conditions to allow most events of germination to occur while preventing the seeds from actually sprouting. The process involves the use of normal, natural conditions, that are controlled in a way to manipulate the activities in the seed. Generally, seeds priming can be conducted through
(1) humidification
(2) hydro-priming
(3) osmotic priming
(4) alternate hydration-dehydration.

In this state, the seeds are hydrated and desirable metabolic activity is switched on. This triggers important pre-germination physiological steps, such as repair of membranes, DNA and RNA synthesis and repair, development of immature embryos, alteration of tissues covering the embryo, destruction or removal of dormancy blocks and general pre-germination metabolism enhancement. At the conclusion of the priming process, the seed is re-dried to its storage moisture level to promote good storage. It is understood that once the framework for actual germination is built and the seeds are dried down to stable moisture levels, planting of the seeds in the field will activate the final germination process through contact with moisture in the soil or cultivation media.

The gains made in priming are not lost following dry-back of the seed. Following the priming process, seed is physiologically closer to germination because of the following reasons (see for review ASGROW Reports: Seed treatments: Trends and Opportunities, 2002; Khan et al.: International Journal of Agricultural Botany, 2003):
(1) Reduction of germination time in the field
(2) Overcoming of dormancy effects
(3) Induction of good germination under more stressful field conditions
(4) Quicker field emergence
(5) Faster crop establishment
(6) Seed disinfections.

The term "pre-sowing hydration treatment" or priming includes
a) non-controlled (such as soaking methods in which water is freely available and not restricted by the environment) and
b) controlled water uptake (such as methods that regulate seed moisture content preventing the completion of germination).

Two techniques can be used for non-controlled water uptake:
(1) priming or soaking with solutions; and/or
(2) priming or soaking with solid particulate systems.

Three techniques can be used for controlled water uptake (see for review ASGROW Reports: Seed treatments: Trends and Opportunities, 2002; Khan et al.: International Journal of Agricultural Botany, 2003; Seed Quest @ seedquest.com):
(1) priming with solutions;
(2) priming with solid particulate systems; and/or
(3) priming by controlled hydration with water.

In a particular preferred embodiment, the seeds treated with a formulation according to the invention are used in a non-controlled seed priming or soaking process for rice (N. Slaton and R Cartwright: Water-Seeded Rice. in: Rice Production Handbook, University of Arkansas Publication, Arkansas, USA).

In seed priming process, especially in a non-controlled seed priming process for rice seeds treated with a formulation according to the invention a prolonged protection of the seed against phytopathogenic fungi and insects up to 120 days can be achieved, which is superior to the nursery box treatment.

The invention furthermore comprises a method for the control of undesired vegetation and/or combating phytopathogenic insects and/or phytopathogenic fungi comprising applying a formulation according the invention to seeds prior sowing. Preferably, the invention furthermore comprises a method for combating soil insects and/or fungi comprising applying a formulation according the invention to seeds prior sowing. The seeds can be treated with the formulation according to the present invention as mentioned above.

The term phytopathogenic fungi includes but is not limited to
*Alternaria* species on vegetables and fruit and rice,
*Bipolaris* and *Drechslera* species on cereals, rice and turf,
*Blumeria graminis* (powdery mildew) on cereals,
*Botrytis cinerea* (gray mold) on strawberries, vegetables, ornamentals and grapevines, *Erysiphe cichoracearum* and *Sphaerotheca fuliginea* on cucurbits,
*Fusarium* and *Verticillium* species on various plants,
*Mycosphaerella* species on cereals, bananas and peanuts,
*Phakopsara pachyrhizi* and *Phakopsara meibomiae* on soybeans
*Phytophthora infestans* on potatoes and tomatoes,
*Plasmopara viticola* on grapevines,
*Podosphaera leucotricha* on apples,
*Pseudocercosporella herpotrichoides* on wheat and barley,
*Pseudoperonospora* species on hops and cucumbers,
*Puccinia* species on cereals,
*Pyricularia oryzae, Cochliobolus miyabeanus* and *Corticium sasakii* (*Rhizoctonia* so*lani*), *Fusarium semitectum* (and/or *moniliforme*), *Helminth.* Spp, *Cercospora oryzae,*
*Cochliobolus miyabeanus, Sarocladium oryzae, S attenuatum, Entyloma oryzae, Gibberella fujikuroi (bakanae), Grainstaining* complex (various pathogens), and/or *Pythium* on rice,
*Rhizoctonia* species on cotton, rice and turf,
*Septoria tritici* and *Stagonospora nodorum* on wheat,
*Uncinula necator* on grapevines,
*Ustilago* species on cereals and sugar cane, and
*Venturia* species (scab) on apples and pears;
   preferably the species
*Alternaria ssp., Pyricularia oryzae, Cochliobolus miyabeanus* and *Corticium sasakii* (*Rhizoctonia solani*), *Fusarium semitectum* (and/or *moniliforme*), *Helminth*. Spp, *Cercospora oryzae, Cochliobolus miyabeanus, Sarocladium oryzae, S attenuatum, Entyloma oryzae, Gibberella fujikuroi (bakanae), Grainstaining* complex (various pathogens), and/or *Pythium* on rice.

The term phytopathogenic insect includes but is not limited to insects from the order of the lepidopterans (*Lepidoptera*), for example *Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibemia defoliaria, Hyphantria cunea, Hyponomeuta malinellus, Keiferia lycopersicella, Lambdina fiscellaria, Laphygma exigua, Leucoptera coffeella, Leucoptera scitella, Lithocol letis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni* and *Zeiraphera canadensis,*
beetles (*Coleoptera*), for example *Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus, Crioceris asparagi, Diabrotica longicornis, Diabrotica 12-punctata, Diabrotica virgifera, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Otiorrhynchus ovatus, Phaedon cochleariae, Phyllotreta chrysocephala, Phyllophaga sp., Phyllopertha horticola, Phyllotreta nemorum, Phyllotreta striolata, Popillia japonica, Sitona lineatus* and *Sitophilus granaria,*
dipterans (*Diptera*), for example *Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga,*
*Culex pipiens, Dacus cucurbitae, Dacus oleae, Dasineura brassicae, Fannia canicularis, Gasterophilus intestinalis, Glossina morsitans, Haematobia irritans, Haplodiplosis equestris, Hylemyia platura, Hypoderma lineata, Liriomyza sativae, Liriomyza trifolii, Lucilia caprina, Lucilia cuprina, Lucilia sericata, Lycoria pectoralis, Mayetiola destructor, Musca domestica, Muscina stabulans, Oestrus ovis, Oscinella frit, Pegomya hysocyami, Phorbia antiqua, Phorbia brassicae, Phorbia coarctata, Rhagoletis cerasi, Rhagoletis pomonella, Tabanus bovinus, Tipula oleracea* and *Tipula paludosa,*
thrips (*Thysanoptera*), e.g. *Frankliniella fusca, Frankliniella occidentalis, Frankliniella tritici, Scirtothrips citri, Thrips oryzae, Thrips palmi* and *Thrips tabaci,*
hymenopterans (*Hymenoptera*), e.g. *Athalia rosae, Atta cephalotes, Atta sexdens, Atta texana, Hoplocampa minuta, Hoplocampa testudinea, Monomorium pharaonis, Solenopsis geminata* and *Solenopsis invicta,*
heteropterans (*Heteroptera*), e.g. *Acrosternum hilare, Blissus leucopterus, Cyrtopeltis notatus, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis* and *Thyanta perditor*,
homopterans (*Homoptera*), e.g. *Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus homi, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand,* and *Viteus vitifolii;*
termites (*Isoptera*), e.g. *Calotermes flavicollis, Leucotermes flavipes, Reticulitermes lucifugus* und *Termes natalensis*;
orthopterans (*Orthoptera*), e.g. *Acheta domestica, Blatta orientalis, Blattella germanica, Forficula auricularia, Gryllotalpa gryllotalpa, Locusta migratoria, Melanoplus bivittatus,*
*Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus* and *Tachycines asynamorus ;*
Arachnoidea, such as arachnids (*Acarina*), e.g. of the families *Argasidae, Ixodidae* and *Sarcoptidae,* such as *Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Omithodorus moubata, Otobius megnini, Dermanyssus gallinae, Psoroptes ovis, Rhipicephalus appendiculatus, Rhipicephalus evertsi, Sarcoptes scabiei,* and Eriophyidae spp. such as *Aculus schlechtendali, Phyllocoptrata o*/*eivora* and *Eriophyes sheldoni*; Tarsonemidae spp. such as *Phytonemus pallidus* and *Polyphagotarsonemus latus*; Tenuipalpidae spp. such as *Brevipalpus phoenicis;* Tetranychidae spp. such as *Tetranychus cinnabarinus, Tetranychus kanzawai, Tetranychus pacificus, Tetranychus telarius* and *Tetranychus urticae, Panonychus ulmi, Panonychus citri, and oligonychus pratensis;*

Nematodes, especially plant parasitic nematodes such as root knot nematodes, *Meloidogyne hapla, Meloidogyne incognita, Meloidogyne javanica*, and other Meloidogyne species; cyst-forming nematodes, *Globodera rostochiensis* and other Globodera species; *Heterodera avenae, Heterodera glycines, Heterodera schachtii, Heterodera trifolii,* and other Heterodera species; Seed gall nematodes, Anguina species; Stem and foliar nematodes, Aphelenchoides species; Sting nematodes, *Belonolaimus longicaudatus* and other Belonolaimus species; Pine nematodes, *Bursaphelenchus xylophilus* and other Bursaphelenchus species; Ring nematodes, Criconema species, Criconemella species, Criconemoides species, Mesocriconema species; Stem and bulb nematodes, *Ditylenchus destructor, Ditylenchus dipsaci* and other Ditylenchus species; Awl nematodes, Dolichodorus species; Spiral nematodes, *Heliocotylenchus multicinctus* and other Helicotylenchus species; Sheath and sheathoid nematodes, Hemicycliophora species and Hemicriconemoides species; Hirshmanniella species; Lance nematodes, Hoploaimus species; false rootknot nematodes, Nacobbus species; Needle nematodes, *Longidorus elongatus* and other Longidorus species; Lesion nematodes, *Pratylenchus neglectus, Pratylenchus penetrans, Pratylenchus curvitatus, Pratylenchus goodeyi* and other Pratylenchus species; Burrowing nematodes, *Radopholus similis* and other Radopholus species; Reniform nematodes, *Rotylenchus robustus* and other Rotylenchus species; Scutellonema species; Stubby root nematodes, *Trichodorus primitivus* and other Trichodorus species, Paratrichodorus species; Stunt nematodes, *Tylenchorhynchus claytoni,* Tylenchorhynchus dubius and other Tylenchorhynchus species; Citrus nematodes, Tylenchulus species; Dagger nematodes, Xiphinema species; and other plant parasitic nematode species ;
and rice pathogens such as rice water weevil (*Lissorhoptrus oryzaphilus)*, rice stem borer (*Chilo suppresalis),* rice leaf roller, rice leaf beetle, rice leaf miner (Agromyca oryzae), leafhoppers (*Nephotettix spp.*;especially smaller brown leafhopper, green rice leafhopper), planthoppers (*Delphacidae;* especially white backed planthopper, brown rice planthopper), stinkbugs;
preferably the rice pathogens such as rice water weevil (*Lissorhoptrus oryzaphilus*), rice stem borer (*Chilo suppresalis*), rice leaf roller, rice leaf beetle, rice leaf miner (Agromyca oryzae), leafhoppers (*Nephotettix spp.*;especially smaller brown leafhopper, green rice leafhopper), planthoppers (*Delphacidae;* especially white backed planthopper, brown rice planthopper), stinkbugs.

The control of undesired vegetation is understood as meaning the destruction of weeds. Weeds, in the broadest sense, are understood as meaning all those plants which grow in locations where they are undesired, for example:
Dicotyledonous weeds of the genera: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindemia, Lamium, Veronica, Abutilon, Emex, Datura, Viola, Galeopsis, Papaver, Centaurea, Trifolium, Ranunculus, Taraxacum.

Monocotyledonous weeds of the genera: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristyslis, Sagittaria, Eleocharis, Scirpus, Paspalum, Ischaemum, Sphenoclea, Dactyloctenium, Agrostis, Alopecurus, Apera.

The seeds are treated with of the pesticidal agent in a range from 0,1 g to 10 kg of pesticidal agent per 100kg of seeds, desirably from 1 g to 5 kg pesticidal agent per 100kg of seeds, more desirably from 1 g to 2,5 kg per 100 kg of seeds.

The invention is illustrated in greater detail by the examples which follow.

### Examples

### Example 1

The trade names of the stickers are compiled in table 1.

**Table 1**

| Trade name of the sticker / water emul-sion | Supplier | Contents (w/w %) | Chemical name |
|---|---|---|---|
| Acronal YJ2810Dap | BASF | 50 | Copolymer with acryl, alkyl-acrylate, alkyl-methacrylate |
| Polysol OLZ 1094 | Showa Highpolymer | 50 | Alkyl-acrylate copolymer |
| Lawnfix 700 | Showa Highpolymer | 50 | Ethylene vinylacetate copolymer |
| Polysol AG-100 | Showa Highpolymer | 50 | Alkyl-acrylate copolymer |
| Polysol AT-860 | Showa Highpolymer | 50 | Alkyl-acrylate copolymer |

### A) Preparation of FS formulations

**Table 2 Formulations**

| No. | FS formulation | Content |
|---|---|---|
| 1 | Orysastrobin FS formula-tion (500g orysastrobin/l) | A FS formulation comprising orysastrobin as pesticidal agent a condensate of phenolsulfonic acid, urea and formaldehyde and POE styrylphenyl ether as surfac-tants, a Silicone oil emulsion as antifoaming agent, propylene glycol as antifreezing agent, Xanthan gum as thickener and 1,2-benzisothiazolin-3-one and 2-methyl-4-isothiazolin-3-one as biocide and water as fil-ler/vehicle |
| 2 | Metrafenone FS formula-tion (500g metrafenone/l) | A FS formulation comprising metrafenone as pesticidal agent, methylnaphthalene sulfonic acid, polymer with formaldhyde, sodium salt and polyoxyethylene-block-polyoxypropylene as surfactants, a Silicone oil emulsion as antifoaming agent, propylene glycol as antifreezing agent, Xanthan gum as thickener and benzisothiazoli-none as biocide and water as filler/vehicle |
| 3 | (Z)-N-[α-(cyclopropyl-methoxyimino)-2,3-difluoro-6-(difluoromethoxy)benzyl]-2-phenylacetamide FS formulation (100g (Z)-N-[α-(cyclopropylmethoxyimino)-2,3-difluoro-6-(difluoro-methoxy)benzyl]-2-phenyl-acetamide / I) | A FS formulation comprising Z)-N-[α-(cyclopropyl-methoxyimino)-2,3-difluoro-6-(difluoromethoxy)benzyl]-2-phenylacetamide as pesticidal agent (c.f. EP-A 1017670), phenol sulfonic acid, polymer with form-aldhyde and urea, sodium salt and polyoxyethylene-block-polyoxypropylene as surfactants, a Silicone oil emulsion as antifoaming agent, propylene glycol as antifreezing agent, Xanthan gum as thickener and ben-zisothiazolinone as biocide and water as filler/vehicle |
| 4 | fluquinconazole FS formu-lation (100g fluquincona-zole/l) | commercial available FS formulation (Jockey) |
| 5 | triticonazole FS formulation (25g triticonazole/l) | commercial available FS formulation (Premis) |

### A-1) Preparation of suspension concentrate of Table 2

Approx. 400 ml of water were introduced into a container, and the amounts of the formulation auxiliaries (surfactants and antifoam) and fungicide (orysastrobin) listed in table 2 were added and the mixture was homogenized. The resulting suspension is ground by means of a wet beads mill, and thickened with the amount of thickener and Biocide (see table 2), which had been predispersed in 98 ml of water. The volume of the suspension was made up to 1000 ml with water and antifreezing agent.

### Example 2

### A) Coating of Rice Seeds

For Rice Seed Coating, a 3.2 ml FS-formulation having the composition indicated in table 2 is stirred with the respective sticker solution listed in table 1 and diluted with 5 - 7 ml water for 100 g rice seed. The resulting aqueous suspension and water are dropped onto the tumbling seeds in a tumbler [TY-NEE Tumbler (A. E. Aubin)] and incubated for 5 - 10min. Afterwards, the coated seeds are completely dried by air at room temperature.

### B) Determination of efficiency of rice seed coating

5g of the seeds coated according to A) 1 were soaked into one liter of water at room temperature (20°C) and the remaining active ingredient on seeds was assayed by extraction periodically at 2 days, 5 days and 8 days. According to the normal rice seed germination process, the whole water was replaced by fresh water at 3 days and 6 days, twice during seed soaking in order to supply oxygen to seeds. The results shown in table 3 demonstrate that seeds coated with sticker showed excellent remaining rate (>80%) of active ingredients on the seeds after eight days soaking with water replaced twice, whereas seeds without sticker showed only a low remaining rate.

**Table 3**

| Formulation [a.i.] | Sticker | Amount of a.i. [g]²⁾ | Amount of sticker [g]² | Remaining a.i. [%] |
|---|---|---|---|---|
| orysatrobin ¹⁾ | Acronal | 500 | 33 | 92.76 |
| orysatrobin ¹⁾ | Lawnfix | 500 | 33 | 85.2 |
| orysatrobin ¹⁾ | Polysol | 500 | 33 | 85.1 |
| orysatrobin ¹⁾ | None | 500 | 33 | 50.9 |

| | | | | |
|---|---|---|---|---|
| ¹⁾ FS formulation of table 2 ²⁾ g/32kg seed | | | | |

### Example 3

### A) Coating of Wheat Seeds

For 100 g wheat seed coating, the respective FS formulation is diluted with a small amount of water. The FS formulation and respective sticker emulsion are dropped onto the tumbling seeds in a tumbler and incubated for 15-20 min.

Afterwards, the coated seeds are dried by air at room temperature (25°C).

### B) - Determination of efficiency of wheat seed coating

As indicated in table 4, the seeds coated with sticker showed excellent remaining rate (>80%) of active ingredients on the seeds after 24h soaking with water at room temperature, whereas seeds without sticker showed only a low remaining rate.

**Table 4**

| Formulation [a.i.] | Sticker | Amount of a.i ¹⁾ | Amount of sticker ¹⁾ | Remaining a.i. [%] |
|---|---|---|---|---|
| fluquincozale FS formulation ²⁾ | none | 150 | - | 27.3 |
| fluquincozale FS formulation ²⁾ | Lawnfix 700 | 150 | 3 | 99.6 |
| fluquincozale FS formulation ²⁾ | Acronal YJ2810Dap | 150 | 3 | 98.9 |
| triticonazole FS formulation ³⁾ | none | 60 | - | 24.1 |
| triticonazole FS formulation ³⁾ | Lawnfix 700 | 60 | 3 | 87.2 |
| triticonazole FS formulation ³⁾ | Acronal YJ2810Dap | 60 | 3 | 88.4 |
| Z)-N-[α-(cyclopropylmethoxyimino)-2,3-difluoro-6-(difluorometh-oxy)benzyl]-2-phenylacetamide FS formulation ⁴⁾ | none | 50 | 3 | 29.2 |
| Z)-N-[α-(cyclopropylmethoxyimino)-2,3-difluoro-6-(difluorometh-oxy)benzyl]-2-phenylacetamide FS formulation ⁴⁾ | Lawnfix 700 | 50 | 3 | 84.8 |
| Z)-N-[α-(cyclopropylmethoxyimino)-2,3-difluoro-6-(difluorometh-oxy)benzyl]-2-phenylacetamide FS formulation ⁴⁾ | Acronal YJ2810Dap | 50 | 3 | 94.0 |
| metrafenone FS formulation ⁵⁾ | none | 500 | - | 54.1 |
| metrafenone FS formulation ⁵⁾ | Lawnfix 700 | 500 | 3 | 91.7 |
| metrafenone FS formulation ⁵⁾ | Acronal YJ2810Dap | 500 | 3 | 94.4 |

| | | | | |
|---|---|---|---|---|
| ¹⁾ [g]/per 100 kg seeds ²⁾ see table 2, No. 4 ³⁾ see table 2, No. 5 ⁴⁾ see table 2, No. 3 ⁵⁾ see table 2, No. 2 | | | | |

### Example 4 - Determination of efficiency of seed coating

Rice seeds of rice cv. Koshihikari coated according to example 2 A were soaked in the solution with the standard seed disinfectants ipconazole and copper hydroxide) to control seed-born diseases, and then soaked in water until germination. After seed disinfection, rice seeds soaked in water until germination characterized by plumule just breaking seed hull. The germinated seeds are seeded on bed soil in a seedling box (normally 30 x 60 x 3 cm) at desired seeding density and covered with topsoil. After seeding, the seedling boxes are incubated at desired temperature (normally ranging 25-30 C) till emergence characterized by coleoptile breaking the soil surface. After confirming the emergence, the seedling boxes are transferred to the place under light to continue seedling nursery till transplanting.

In the field, blast-infected (*Pyricularia oryzae*) rice seedlings were transplanted throughout the rice field. As for sheath blight, mycelia as inoculated were spread in the rice field.

For assessment of the data, the damage index of sheath blight was computed after standard (Hashiba method), which is based on the evaluation on the number of infected plants and vertical development of the disease symptoms in the certain sampling plot. The determination of panicle blast has been made by counting the number of panicles attached by neck blast and ranked by classes.

The data summarized in table 5 showed that the seeds coated with a sticker according to the invention were nearly not affected by the rice blast.

**Table 5**

| Formulation [a.i. (amount ¹⁾)] | Sticker (amount¹⁾) | Efficacy % ²⁾ Leaf blast ³⁾ | Efficacy % ²⁾ Panicle blast ³⁾ | Efficacy % ²⁾ Sheath blight ⁴⁾ |
|---|---|---|---|---|
| [orysastrobin (500)] | LAWNFIX (33) | 97 | 84 | 99 |
| [orysastrobin (500)] | POLYSOL (33) | 97 | 80 | 99 |
| Untreated³⁾ | 0 | 0⁵⁾ | 0⁵⁾ | 0⁵⁾ |

| | | | | |
|---|---|---|---|---|
| ¹⁾ g / 32 kg seed; FS formulation (see table 2, No. 1) ²⁾ Control percentage = (infection of the untreated - infection of treatment)/(infection of the untreated) x 100 ³⁾ *Pyricularia oryzae* ⁴⁾ *Cortitium sasakii* ⁵⁾ 21.7% infection | | | | |

## Claims

1. A seed treatment formulation comprising
(a) at least one pesticidal agent; and
(b) an acrylate copolymer, wherein the acrylate copolymers comprises
(a') acrylic acid, methacrylic acid or itaconic acid or a combination of at least two monomers selected from the group consisting of acrylic acid, methacrylic acid or itaconic acid, from 0.2 % (w/w) to 6% (w/w); and
(b') methyl methacrylate, ethyl acrylate, n-butyl acrylate, cyclohexyl methacrylate, 2-ethylhexyl acrylate or (meth)acrylamide from 50 % (w/w) to 99.8 % (w/w); and
(d') styrene from 0% (w/w) to 50% (w/w); and wherein the acrylate copolymer has either a glass transition temperature of -40°C to 5°C; or, if the acrylate copolymers have a core/shell structure a glass transition temperature of the inner core of -60°C to 5°C and of the outer shell of 20°C to 150°C.

2. A seed treatment formulation according to claim 1, wherein the acrylate copolymer has a core shell structure.

3. A seed treatment formulation according to claims 1 or 2, wherein the amount of the carboxylgroup containing polymer is between 0.5 and 15 % (w/w) on a solid content base.

4. Use of a polymer as defined in claim 1 for the preparation of a seed treatment formulation.

5. Seeds treated with a formulation according to any of claims 1 to 3.

6. Rice seeds treated with a formulation according to any of claims 1 to 3.

7. A method for the treatment of a seeds prior sowing comprising the following steps:
a) applying to a solvent a formulation according to any of claims 1 to 3; and
b) applying to a seed the mixture obtained in step a).

8. A method according to claim 7 for the treatment of a seeds prior sowing, wherein the seeds are rice seeds.

9. Use of a formulation according to any of claims 1 or 3 in a seed priming process.

10. A method for the treatment of a seeds prior sowing in a seed priming process comprising the following steps:
(i) hydration of seeds under controlled conditions followed by germination of seeds under controlled conditions;
(ii) treatment of seeds with a formulation according to any of claims 1 to 3;
wherein
(a) the hydration can be done in first and the treatment of seeds with a formulation according to any of claims 1 to 3 in a second step or,
(b) the treatment of seeds with a formulation according to any of claims 1 to 3 can be done first followed by the hydration of seeds.

11. A method for the control of undesired vegetation and/or combating phytopathogenic insects and/or phytopathogenic fungi comprising applying a formulation according to any of claims 1 to 3 to seeds prior sowing.

12. A method for the control of undesired vegetation and/or combating phytopathogenic insects and/or phytopathogenic fungi comprising applying a formulation according to any of claims 1 to 3 to rice seeds prior sowing.
